## Europäisches Patentamt
## European Patent Office
## Office européen des brevets

(19)

(11) Veröffentlichungsnummer : **0 087 455**
**B1**

(12)  # EUROPÄISCHE PATENTSCHRIFT

(45) Veröffentlichungstag der Patentschrift :
**11.12.85**

(21) Anmeldenummer : **82902725.9**

(22) Anmeldetag : **07.09.82**

(86) Internationale Anmeldenummer :
**PCT/EP 82/00194**

(87) Internationale Veröffentlichungsnummer :
**WO/8300924 (17.03.83 Gazette 83/07)**

(51) Int. Cl.⁴ : **G 01 F 25/00, G 01 F 13/00,
C 02 F 1/68**

(54) **PRÜFEINRICHTUNG.**

(30) Priorität : **11.09.81 DE 3136112**

(43) Veröffentlichungstag der Anmeldung :
**07.09.83 Patentblatt 83/36**

(45) Bekanntmachung des Hinweises auf die Patenterteilung : **11.12.85 Patentblatt 85/50**

(84) Benannte Vertragsstaaten :
**AT BE CH DE FR GB LI LU NL SE**

(56) Entgegenhaltungen :
**DE-A- 2 807 635
GB-A- 2 057 283
US-A- 4 073 304
US-A- 4 171 638**

(73) Patentinhaber : **Grünbeck Wasseraufbereitung GmbH
Industriestr. 1
D-8884 Höchstädt (DE)**

(72) Erfinder : **ARENS, Hans
Uhlandweg 6
D-8857 Wertingen (DE)**

(74) Vertreter : **Prüfer, Lutz H., Dipl.-Phys.
Harthauser Strasse 25d
D-8000 München 90 (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft eine Prüfeinrichtung nach dem Oberbegriff des Anspruches 1.

Derartige Dosiergeräte, die insbesondere für die Wassernachbehandlung Anwendung finden, müssen in bestimmten Intervallen geprüft werden. Dabei müssen verschiedene Funktionen, nämlich die Dosiergenauigkeit, also die abgegebene Dosiermenge, das Vorhandensein der ausreichenden Betriebsspannungen, die Ansteuerung der Dosierpumpe, die Kontrollampenfunktion und der Dosierpumpendruck geprüft werden. Zur gleichzeitigen Wartung ist es ferner möglich, daß eine Spülung des Dosiersystems mit Warmwasser erforderlich wird. Zu diesem Zweck wird das Gerät geöffnet, und es werden mittels entsprechender Geräte die einzelnen Funktionen geprüft.

Eine Prüfeinrichtung der eingangs beschriebenen Art ist aus der US-PS 4 073 304 bekannt. Hierbei ist ein mit dem Ausgang des Dosiergerätes fest verbundener Meßzylinder vorgesehen und über die Umschaltung von Ventilen kann die dosierte Flüssigkeit anstelle des Hauptstromes in diesen Meßzylinder gefördert werden. Der Antrieb der Pumpe erfolgt dabei jedoch weiterhin in Abhängigkeit vom Ausgangssignal eines im Hauptstrom angeordneten Durchflußmeßgerätes.

Aufgabe der Erfindung ist es, eine Prüfeinrichtung der eingangs beschriebenen Art zu schaffen, mit der auf einfache Weise eine ·Überprüfung aller Funktionen des Dosiergerätes möglich ist, ohne daß das Dosiergerät hierzu geöffnet werden muß. Auch ein Spülen des Dosiergerätes soll auf einfache Weise möglich werden.

Diese Aufgabe wird durch eine Prüfeinrichtung gelöst, welche gemäß der Erfindung gekennzeichnet ist durch die Merkmale des kennzeichnenden Teiles des Anspruches 1.

Weitere Merkmale und Zweckmäßigkeiten der Erfindung ergeben sich aus der Beschreibung eines Ausführungsbeispieles anhand der Figuren. Von den Figuren zeigen :

Figur 1 eine teilweise perspektivische Darstellung eines Dosiergerätes mit der Prüfeinrichtung ;

Figur 2 eine blockschaltbildartige Darstellung von Prüfgerät und Dosiergerät.

Das Dosiergerät 1 weist in üblicher Weise einen Wasserzähler 2, einen Dosierpumpenantrieb 3 und eine Dosierpumpe 4 auf. Der Dosierpumpenantrieb wird eingangsseitig mit von dem Wasserzähler 2 kommenden Impulsen in Abhängigkeit von der Durchflußmenge beaufschlagt. Die Dosierpumpe 4 ist mit einem Vorratsbehälter 5 verbunden, aus dem im Normalbetrieb die zu dosierende Chemikalie abgesaugt wird. Die Dosierpumpe 4 führt über eine Dosierleitung 6 zu einem Dosierventil 7, welches auf der Ablaufseite der Wasserleitung 8 vorgesehen ist. Die Dosierleitung 7 weist an ihrem freien Ende eine entsprechende Kupplung 9 auf, mittels der die Dosierleitung mit dem Dosierventil verschraubbar ist.

Die Prüfeinrichtung 10 weist eine Meßeinrichtung 11 mit einem eine Skala 12 aufweisenden Meßbehälter 13 auf. Der Meßbehälter 13 ist bodenseitig mit einer Zufuhrleitung 14 verbunden, die an ihrem anderen Ende mit einem Anschlußteil 15 verbunden ist, welches in seinen Abmessungen und seiner Ausbildung dem Anschlußteil des Dosierventils 7 entspricht, so daß eine Verbindung zwischen der Kupplung 9 und dem Anschlußteil 15 möglich ist. Auf das Anschlußteil 15 folgend ist in der Zufuhrleitung 14 ein Manometer 38, ein Druckhalteventil 16 und zwischen diesem Druckhalteventil und dem Meßbehälter 13 ein Ablaßventil 17 vorgesehen.

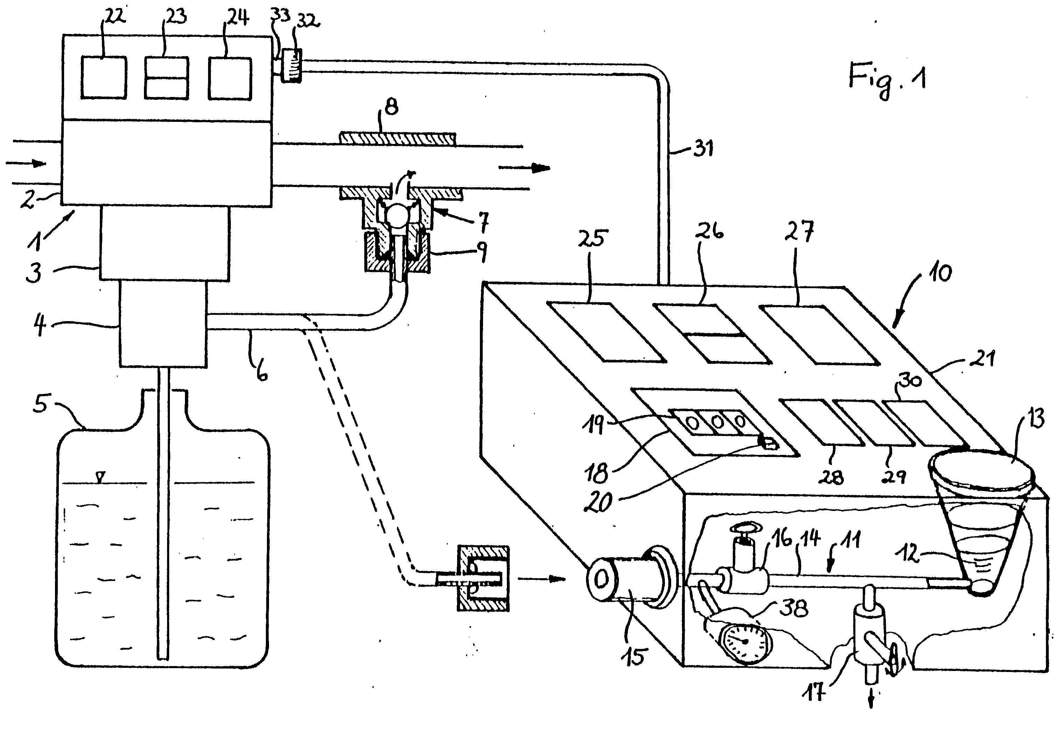

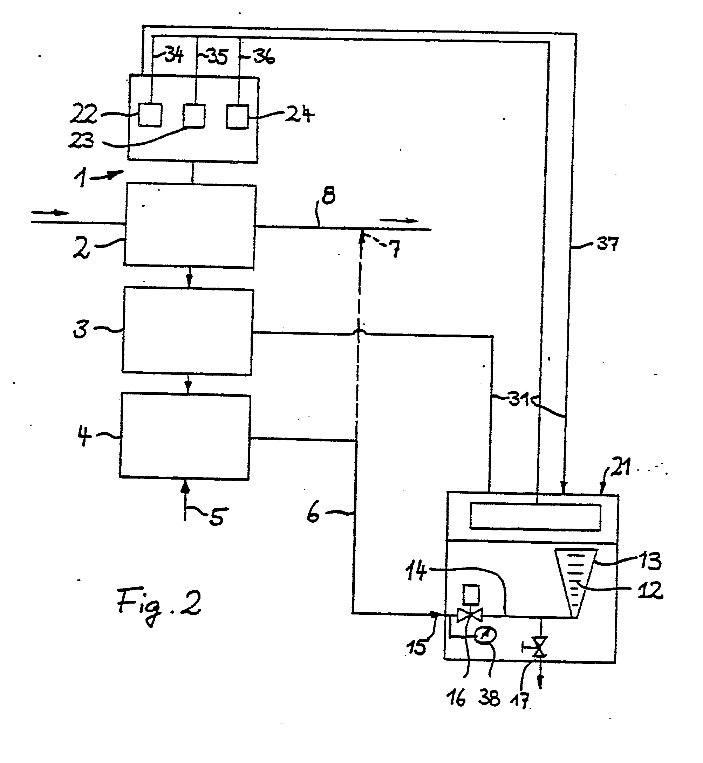

Die Prüfeinrichtung 10 umfaßt ferner eine Steuerung 21 mit einem Impulsgeber 18. Der Ausgang des Impulsgebers ist mit dem Eingang des Dosierpumpenantriebs 3 verbindbar. Der Impulsgeber 18 ist so ausgebildet, daß die Impulse ein stellbar sind, und er besitzt ein Impulszählwerk 19 und eine Rückstelleinrichtung 20. Die Steuerung 21 weist ferner den Kontrollampen 22, 23, 24 des Dosiergerätes entsprechende Kontrollampen 25, 26, 27 insbesondere für die Betriebsanzeige, die Dosierwechselanzeige und die Chemikalienmangelanzeige auf. Die Kontrollampen 25, 26, 27 sind mittels Leitungen 34, 35, 36 mit den entsprechenden Kontrollampen 22, 23, 24 verbindbar. Ferner sind eine Taste 28 zum Start des Impulsgebers 18, eine Taste 29 als Prüftaste für die Betriebsanzeige der Kontrollampen 22 bis 27 und eine Taste 30 zum manuellen Erzeugen von Wasserzählimpulsen vorgesehen. Die Ausgänge der Steuerung 21 und der Tasten und Kontrollampen sind in einem Kabel 31 geführt, welches an seinem freien Ende ein Kupplungsstück 32 aufweist, mittels dessen das Kabel über einen Stecker 33 mit den entsprechenden Teilen des Dosiergerätes verbindbar ist. In Figur 1 ist das Kabel 31 an das Dosiergerät angeschlossen, während die Dosierleitung 6 noch mit dem Ventil 7 verbunden ist. In Figur 2 ist die Dosierleitung 6 mit der Meßeinrichtung 11 verbunden, und die Steuerung 21 ist mit dem Dosiergerät verbunden. Das Dosiergerät ist in üblicher Weise mit einer Spannungsversorgung verbunden, die nicht gezeigt ist. Über eine in dem Kabel 31 geführte Leitung 37 erfolgt ein Anschluß der Steuerung an die Spannungsversorgung des Dosiergerätes.

Zum Prüfen des Dosiergerätes wird die Prüfeinrichtung 10 mittels des Kabels 31 und der Verbindung von Kupplung 9 mit Anschlußteil 15 verbunden. Dann leuchtet die Kontrollampe 25 parallel zur Kontrollampe 22 zum Anzeigen des Betriebes auf. Die Kontrollampe 26 zeigt parallel zu der Kontrollampe 23 wechselnd den Dosierwechsel an. Die Kontrollampe 27 zeigt gleichzeitig mit der Kontrollampe 24 einen Dosiermittelmangel an, sobald die Dosiermittelzufuhr aus dem Behälter 5 unterbrochen wird.

Zum Prüfen der Funktionsfähigkeit des Wasserzählers und Impulsgebers wird Wasser durch die Leitung 8 hindurchgelassen. In Abhängigkeit von der durchgeflossenen Wassermenge wird dadurch Dosiermittel in den Meßbehälter 13 gepumpt, wenn Wasserzähler mit Impulsgeber einwandfrei funktionieren.

Zum Prüfen des Dosierpumpenantriebes 3 und der Dosierpumpe 4 wird mit der Taste 28 der Impulsgeber 18 eingeschaltet und gleichzeitig der Impulsgeber des Wasserzählers abgestellt. In Abhängigkeit von der vom Impulsgeber 18 gelieferten Impulszahl wird Dosierflüssigkeit in den Meßbehälter 13 gepumpt. Aus der Relation von Impulsen und Flüssigkeitsstand im Meßbehälter 13 kann die Funktion geschlossen werden. Der Impulsgeber 18 ist vorzugsweise so ausgebildet, daß er automatisch nach Ablauf von 100 Impulsen abschaltet. Zum Zählwerkrückstellen wird die Rückstelltaste 20 betätigt. Das Druckhalteventil 16 ist vorzugsweise einstellbar ausgebildet, so daß prüfbar ist, bis zu welchem Gegendruck Dosierpumpenantrieb und Dosierpumpe einwandfrei arbeiten.

Die Meßmarken der Skala 12 sind ein Maß für die einzelnen Dosiermengen entsprechend der Impulsabstände bei verschiedenen Impulswasserzählern mit verschiedenen Nennweiten, z. B.

Nennweite 1" I = 0,33 I/1 Impuls
Nennweite 11/4" I = 0,5 I/1 Impuls
Nennweite 11/2" I = 0,85 I/1 Impuls
Nennweite 2" I = 1,5 I/1 Impuls
(1" = 25,4 mm)

Damit die Prüfung der Dosiermengen bei allen Nennweiten vorgenommen werden kann, ist der Meßbegälter 13 konisch gestaltet, wodurch die Bauhöhe verkleinert wird.

Nach Abschluß jeder Messung oder Neueinstellung der Dosierpumpe wird der Meßbehälter 13 über das Ablaßventil 17 entleert.

Zu dem ebenfalls zur Wartung gehörenden Spülung des Dosiergerätes mit Warmwasser wird die Dosierpumpe 4 anstelle mit dem Vorratsbehälter 5 mit einem Warmwasservorratsbehälter verbunden und der Dosierpumpenantrieb entweder über den Wasserzähler 2 oder den Impulsgeber 18 so lange in Betrieb gesetzt, bis eine ausreichende Spülung erfolgt ist. Anschließend wird die Kupplung 9 wieder von dem Anschlußteil 15 gelöst und mit dem Ventil 7 verbunden und das Kupplungsstück 32 von dem Stecker 33 getrennt. Der Prüf- und Spülvorgang des Dosiergerätes ist dann beendet.

## Patentansprüche

1. Prüfeinrichtung (10) für ein Dosiergerät (1) zum Dosieren einer Flüssigkeit in einen Hauptstrom in Abhängigkeit von von einem im Hauptstrom angeordneten Durchflußmesser (2) zu einem Eingang des Dosiergerätes (1) gelieferten Steuersignalen, mit einer mit dem Ausgang des Dosiergerätes (1) verbindbaren Meßeinrichtung (11) zum Messen der dosierten Flüssigkeitsmenge, gekennzeichnet durch eine Steuerung (21), die den vom Durchflußmesser (2) gelieferten Steuersignalen entsprechende Signale erzeugt und deren Ausgang mit dem Eingang des Dosiergerätes (1) zur Prüfung verbindbar ist.

2. Prüfeinrichtung nach Anspruch 1, dadurch gekennzeichnet, daß die Zuführung von Steuersignalen vom Durchflußmesser (2) zum Dosiergerät (1) unterbrochen ist, wenn die Steuerung (21) mit dem Dosiergerät (1) verbunden ist.

3. Prüfeinrichtung nach Anspruch 1 oder 2, dadurch gekennzeichnet, daß die Signale so einstellbar sind, daß sie verschiedenen Durchflußmengen zugeordneten Steuersignalen entsprechen.

4. Prüfeinrichtung nach einem der Ansprüche 1 bis 3, dadurch gekennzeichnet, daß die Steuerung (21) einen Impulsgeber (18) aufweist.

5. Prüfeinrichtung nach einem der Ansprüche 1 bis 4, dadurch gekennzeichnet, daß das Dosiergerät (1) am Eingang einen Stecker (33) zur Verbindung mit einem mit dem Ausgang der Steuerung (21) verbundenen Elektrokabel (31) der Prüfeinrichtung (10) aufweist.

6. Prüfeinrichtung nach einem der Ansprüche 1 bis 5, dadurch gekennzeichnet, daß die Meßeinrichtung (11) einen konisch ausgebildeten Meßbehälter (13) aufweist.

7. Prüfeinrichtung nach einem der Ansprüche 1 bis 6, dadurch gekennzeichnet, daß die Meßeinrichtung (11) einen Manometer (38) und ein Druckhalteventil (16) aufweist.

8. Prüfeinrichtung nach einem der Ansprüche 1 bis 7, dadurch gekennzeichnet, daß das Dosiergerät (1) Anzeigen (22, 23, 24) aufweist, die mittels der Steuerung (21) mit einer elektrischen Prüfspannung beaufschlagbar sind.

9. Prüfeinrichtung nach einem der Ansprüche 1 bis 8, dadurch gekennzeichnet, daß der Ausgang der Steuerung (21) mit dem Eingang des Dosiergerätes (1) lösbar verbunden ist, und daß ein zur Meßeinrichtung (11) führender Anschluß (15) vorgesehen ist, der mit dem Ausgang des Dosiergerätes (1) lösbar verbindbar ist.

## Claims

1. Testing apparatus (10) for a metering device (1) for metering a liquid into a main stream under the control of control signals supplied to an input of the metering device (1) by a flow meter located in the main stream, comprising a measuring apparatus (11) for measuring the metered amount of liquid, the measuring apparatus being connectable to the outlet of the metering device (1), characterized by a control unit (21) which generates signals corresponding to the control signals supplied by the flow meter (2) and which has an output connectable with the input of the metering device (1) for testing purposes.

2. Testing apparatus according to claim 1, characterized in that the supply of control signals from the flow meter (2) to the metering device (1) is interrupted whenever the control unit (21) is connected with the metering device (1).

3. Testing apparatus according to claim 1 or 2, characterized in that the signals can be adjusted in a manner such that they correspond to control signals which are associated to various flow rates.

4. Testing apparatus according to any of the claims 1 to 3, characterized in that the control unit (21) comprises a pulse generator (18).

5. Testing apparatus according to any of the claims 1 to 4, characterized in that the metering device (1) comprises a plug (33) at the input thereof for the purpose of the connection with an electric cable (31) of the testing apparatus (10), the electric cable being connected with the output of the control unit (21).

6. Testing apparatus according to any of the claims 1 to 5, characterized in that the measuring apparatus (11) comprises a conically shaped measuring container (13).

7. Testing apparatus according to any of the claims 1 to 6, characterized in that the measuring apparatus comprises a pressure gauge (38) and a pressure-holding valve (16).

8. Testing apparatus according to any of the claims 1 to 7, characterized in that the metering device (1) comprises displays (22, 23, 24) to which a test voltage can be applied by means of the control unit (21).

9. Testing apparatus according to any of the claims 1 to 8, characterized in that the output of the control unit (21) is detachably connected with an input of the metering device (1) and that a connection (15) leading to the measuring apparatus (11) is provided which is detachably connectable with the output of the metering device (1).

## Revendications

1. Dispositif de vérification (10) pour appareil doseur (1) pour l'introduction dosée d'un liquide dans un courant principal sous la dépendance de signaux de commande fournis à une entrée de l'appareil doseur (1) par un débitmètre (2) disposé dans le courant principal, comportant un dispositif de mesure (11) pouvant être relié à la sortie de l'appareil doseur (1) pour la mesure de la quantité de liquide dosée, caractérisé par une commande (21) qui engendre des signaux correspondants aux signaux de commande fournis par le débitmètre (2) et dont la sortie peut être reliée, pour la vérification, à l'entrée de l'appareil doseur (1).

2. Dispositif de vérification selon la revendication 1, caractérisé par le fait que l'amenée de signaux de commande du débitmètre (2) à l'appareil doseur (1) est interrompue quand la commande (21) est reliée à l'appareil doseur (1).

3. Dispositif selon l'une des revendications 1 et 2, caractérisé par le fait que les signaux peuvent être réglés de façon telle qu'ils correspondent à des signaux de commande adjoints à différents débits.

4. Dispositif selon l'une des revendications 1 à 3, caractérisé par le fait que la commande (21) présente un transmetter d'impulsions (18).

5. Dispositif selon l'une des revendications 1 à 4, caractérisé par le fait que l'appareil doseur (1) présente à l'entrée une fiche (33) pour la liaison avec une câble électrique (31) du dispositif de vérification (10), lié à la sortie de la commande (21).

6. Dispositif selon l'une des revendications 1 à 5, caractérisé par le fait que le dispositif de mesure (11) présente un récipient de mesure (13) de forme conique.

7. Dispositif selon l'une des revendications 1 à 6, caractérisé par le fait que le dispositif de mesure (11) présente un manomètre (38) et une valve de maintien de pression (16).

8. Dispositif selon l'une des revendications 1 à 7, caractérisé par le fait que l'appareil doseur (1) présente des indications (22, 23, 24) qui peuvent être alimentées, au moyen de la commande (21), par une tension électrique de vérification.

9. Dispositif selon l'une des revendications 1 à 8, caractérisé par le fait que la sortie de la commande (21) est reliée de façon détachable à l'entrée de l'appareil doseur (1) et qu'il est prévu un raccordement (15) menant au dispositif de mesure (11) et qui peut être relié de façon détachable à la sortie de l'appareil doseur (1).

Fig.1

Fig. 2